# EUROPEAN PATENT SPECIFICATION

(11) **EP 1 329 123 B1**
(45) Date of publication and mention of the grant of the patent: **18.08.2004**
(21) Application number: 01970455.0
(22) Date of filing: 25.09.2001
(51) Int. Cl.: H04Q 7/38

(54) **A PORTABLE WIRELESS GATEWAY**
TRAGBARES DRAHTLOSES GATEWAY
PASSERELLE SANS FIL PORTABLE

(30) Priority: 25.09.2000 SE 0003417; 04.01.2001 US 753657
(43) Date of publication of application: 23.07.2003
(73) Proprietor: Possio AB (pulb), 187 12 Täby (SE)
(72) Inventor: TJÄLLDIN, Birger, S-183 40 Täby (SE); SÖDERBERG, Ulf, S-183 40 Täby (SE)
(74) Representative: Rosenquist, Per Olof
(86) International application number: PCT/SE2001/002058
(87) International publication number: WO 2002/030145

(56) References cited:
- EP-A2- 0 300 350
- WO-A1-01/03392
- WO-A1-97/01940
- WO-A1-99/33226
- US-A- 5 968 123

## Description

### TECHNICAL FIELD

The present invention relates to a gateway, and in particular to a gateway designed to constitute a wireless bridge between two wireless networks.

### BACKGROUND OF THE INVENTION AND PRIOR ART

Today, many types of different wireless networks exist. The different networks typically use different radio frequency transmission methods and specific communication protocols. Thus, when information is to be transmitted over two different networks from a transmitter to a receiver, the information must in most cases be translated or transcoded from a first format into a second format when the information is passed from the first network to the second network. Such a translation is usually performed by a so-called gateway. Hence, the gateway constitutes a communication bridge between the two different networks.

WO-A1-99/33226 discloses a communication server acting as a gateway between two communication networks implementing different protocols for messaging. The server is adapted to convert the protocol of one of the networks to the protocol of the other network, by accessing protocol conversion information in a knowledge base.

EP-A2-0300350 discloses a gateway serving to convert and transfer messages exchanged in data communication between two terminal equipments residing in different communication networks.

### SUMMARY

It is an object of the present invention to provide a new type of gateway enabling many new mobile applications, and for enhancing existing applications, by providing a bridge between different wireless communications environments.

This object and others are obtained by a portable gateway providing a wireless bridge between a first wireless network and a second wireless network, in particular between a Bluetooth network and a Wireless Local Area Network (W LAN). The portable gateway comprises a format conversion unit for converting the format of communicated signals between the formats used by the first and second wireless networks, respectively. The gateway further comprises either:
(i) two expansion card slots for receiving in each slot an expansion card, where each expansion card constitutes a wireless interface towards one of the first and second wireless networks, respectively, or:
(ii) one integrated wireless communication unit constituting a wireless interface towards a predetermined wireless network of the first and second wireless networks, and one expansion card slot for receiving an expansion card constituting a wireless interface towards the other one of the first or second wireless networks.

According to the invention, the portable gateway has at least one slot, preferably two slots, for receiving an expansion card, sometimes referred to as a plug-in card, for providing wireless connectivity towards a selected wireless network. By way of example, the expansion card may be any of: a PC Card, a CompactFlash card and an SD (Secure Digital) card. By selecting one or two suitable expansion cards, the portable gateway may constitute a wireless bridge between any selected wireless networks.

The new applications, and the existing applications, may, in particular, include devices such as mobile phones, Personal Digital Assistants (PDA's), or other mobile devices, equipped with Wireless Application Protocol (WAP) and means for Bluetooth connectivity.

For these and other devices, the gateway as described herein will enable new mobile Internet applications, in particular such applications requiring transmission speeds in the range of approximately 100kbit/s to 1 Mbit/s. Also, future applications will involve even higher transmission speeds.

These and other mobile applications are enabled by using one wireless network, such as Bluetooth, as the carrier for the Internet access of the device by communicating to the gateway, which is, in turn accessing the Internet, by another wireless network, e.g. by means of a W LAN.

### BRIEF DESCRIPTION OF THE DRAWINGS

The present invention will now be described in more detail and with reference to the accompanying drawings, in which:
- Fig. 1 is a view from above of a gateway.
- Fig. 2 is the view in Fig.1 of the gateway having its cover removed.
- Fig. 3 is a cross section of the gateway in Figs. 1 and 2.
- Fig. 4 is a schematic block diagram of a portable gateway.

### DESCRIPTION OF PREFERRED EMBODIMENTS

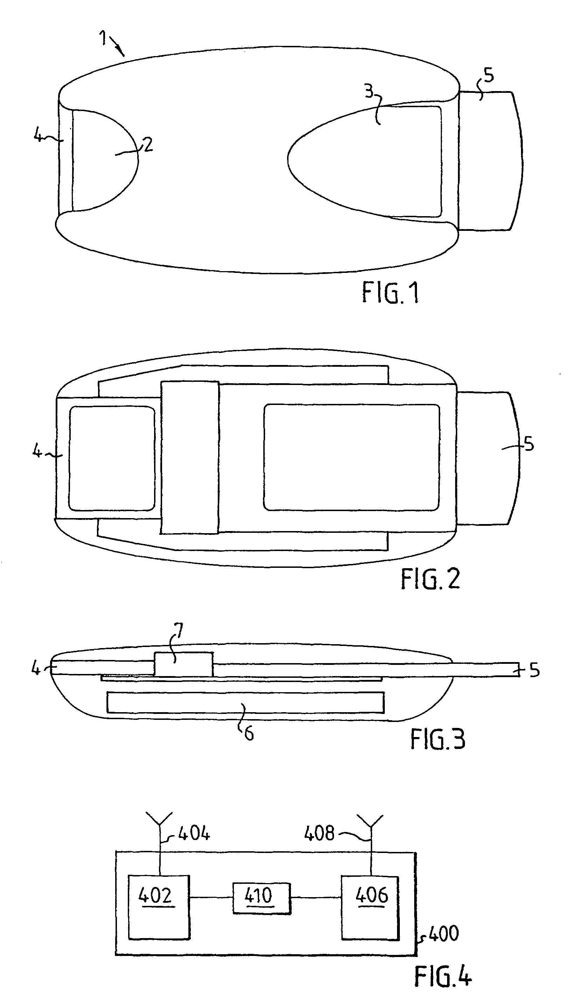

In Fig. 1, a view from above of a portable gateway 1 is shown. The gateway 1 comprises two slots 2 and 3 for receiving an expansion card, also referred to as a plug-in card, for providing wireless connectivity. Each expansion card then constitutes a wireless communication unit for communicating towards a selectable wireless network. The expansion card is in this example a PC Card (PCMCIA), but may alternatively be a CompactFlash card or an SD (Secure Digital) card. The invention is thus not limited to any particular expansion card. In this example, each of the two slots 2 and 3 receives a PC Card 4 and 5, respectively. The PC Card slots are located on two different sides facing each other, and preferably, the gateway has an elongated shape. The size of the gateway 1 is preferably large enough for encompassing the PC Cards, but small enough to fit inside a pocket or a small briefcase. In a preferred embodiment, the gateway is designed as a thin, essentially rectangular, unit having the measures of only 142x78x28 mm.

In Fig. 2, the gateway 1 is shown with its cover being removed. Further, the gateway comprises a battery 6 and a control unit 7, as shown in Fig. 3.

The first PC Card 4 provides an interface towards a first wireless network, for example a Bluetooth network, and the second PC Card 5 provides an interface towards a second wireless network, for example a W LAN network or a GSM/GPRS network or a UMTS network.

In another preferred embodiment, one of the interfaces towards the wireless networks is a wireless communication unit integrated in the portable gateway 1. Thus, the gateway may have only one slot for receiving an expansion card. For example, if the gateway is designed to always be connected to a Bluetooth network and to be connected to another wireless network, which may be selected, or if the gateway has some specific requirements, i.e. a smart card with a subscription identification module, SIM, or any specific security application, the gateway may have an integrated permanent communication unit providing an interface to the Bluetooth network, and only one expansion card slot for providing an interface to the other selectable wireless network.

Fig. 4 illustrates schematically a portable gateway in accordance with the invention. The portable gateway 400 comprises a first wireless communication unit 402, including an antenna 404, for communicating towards a first wireless network, not shown, and a second wireless communication unit 406, including an antenna 408, for communicating towards a second wireless network, likewise not shown. In one embodiment, each of the wireless communication units 402 and 406 may comprise a selectable expansion card, not shown in Fig. 4, inserted into a card slot as described above, for providing communication towards a corresponding selected wireless network. In another embodiment, one of the wireless communication units 402, 406 may be an integrated wireless communication unit for communication towards a predetermined wireless network. The antennas 404, 408 may be integrated with the communication units 402, 406 or may be separate antennas connected thereto.

The gateway 400 further comprises a format conversion unit 410 for converting the format of communicated signals between the formats used by the first and second wireless network, respectively. The format conversion typically involves transcoding of the signals. The battery 6 and the control unit 7 shown in Fig. 3 are not shown in Fig. 4.

For portable gateways between two wireless systems, undesired signal interference may in some circumstances occur between the signals from the two antennas 404, 408, being used for access to the two wireless networks. This may be the case if the two antennas are mounted in close proximity, e.g. if the gateway is using two expansion cards having integrated or extending antennas, in particular if one card is placed on top of the other. Thus, in the case when two expansion cards are used, such signal interference may be avoided, or at least reduced, by locating the expansion cards, with the antennas located on opposite sides of the portable gateway a maximum distance apart.

In the preferred embodiment of a gateway shown in Fig. 1, using two expansion cards, this is achieved by designing the slots in one plane, but with their entry slots maximally separated, resulting in a maximum distance between the antennas used for communication towards the two wireless networks.

This may also be the case, when using one expansion card for access to a selected wireless network, and an integrated or extending antenna for access to a predetermined wireless network, if the respective antennas are not located on opposite sides of the portable gateway.

Likewise, in the case when one expansion card is used, it is advantageous to arrange the antennas on opposite sides of the portable gateway, with a maximum distance apart.

The invention as described herein may be used for providing a wireless access method towards the Internet for mobile phones (or PDA's), which is fast, and can be charged at flat rate.

By providing this alternative method of Internet access, the device as described herein will enhance many new applications, such as WAP (over Bluetooth, including voice/audio), enable Music (MPEG-3), streaming Video and Image telephony (MPEG-4), in mobile phones (or PDA's), and many other Internet applications requiring 0.5-1 Mbit/s.

While the invention has been described with reference to specific exemplary embodiments, the description is only intended to illustrate the inventive concept and should not be taken as limiting the scope of the invention, which is defined by the appended claims.

## Claims

1. A gateway for providing a wireless bridge between a first wireless network and a second wireless network, **characterised in that** the gateway (1, 400) is portable and comprises a format conversion unit (410) adapted to convert the format of communicated signals between the formats used by the first and second wireless networks, respectively, the gateway further comprising either:
(i) two expansion card slots (2, 3) adapted to receive in each slot an expansion card (4, 5), where each expansion card constitutes a wireless interface towards one of the first and second wireless networks, respectively, or:
(ii) one integrated wireless communication unit constituting a wireless interface towards a predetermined wireless network of the first and second wireless networks, and one expansion card slot (2 or 3) adapted to receive an expansion card (4 or 5) constituting a wireless interface towards the other one of the first or second wireless networks.

2. A gateway according to claim 1, **characterised in that**, if the gateway comprises two expansion card slots, the slots (2, 3) are designed in one plane and located on opposite sides of the gateway.

3. A gateway according to claim 1 or 2, **characterised in that** the gateway has an elongated shape and is designed as a thin substantially rectangular unit.

4. A gateway according to any of claims 1 - 3, **characterised in that** the gateway provides a wireless bridge between a Bluetooth network and a Wireless Local Area Network.

5. A gateway according to any of claims 1 - 3, **characterised in that** the gateway provides a wireless bridge between a cellular wireless network and another wireless network.

6. A gateway according to claim 5, wherein the cellular network is a GSM Global System for Mobile communication, or a GPRS General Packet Radio Service, or a UMTS Universal Mobile Telecommunications System network.

7. A gateway according to any of claims 1 - 6, **characterised in that** the expansion card slot/s is/are adapted to receive any of: a PC Card, a CompactFlash card and an SD Secure Digital card.

## Patentansprüche

1. Gateway zur Bildung einer drahtlosen Brücke zwischen einem ersten drahtlosen Netzwerk und einem zweiten drahtlosen Netzwerk,
**dadurch gekennzeichnet, dass** das Gateway (1,400) tragbar ist und eine Formatkonvertierungseinheit (410) aufweist, die geeignet ist zum Konvertieren des Formats übermittelter Signale zwischen den vom ersten und vom zweiten drahtlosen Netzwerk jeweils verwendeten Formaten, wobei der Gateway ferner entweder aufweist:
(i) zwei Erweiterungskartenschlitze (2,3), die jeweils eine Erweiterungskarte (4,5) aufnehmen können, wobei jede Erweiterungskarte ein drahtloses Interface zu einem der ersten und zweiten drahtlosen Netzwerke bildet, oder:
(ii) eine integrierte drahtlose Kommunikationseinheit, die ein drahtloses Interface zu einem vorbestimmten drahtlosen Netzwerk der ersten und zweiten drahtlosen Netzwerke bildet, und einen Erweiterungskartenschlitz (2 oder 3), der eine Erweiterungskarte (4 oder 5) aufnehmen kann, die ein drahtloses Interface zu dem anderen der ersten oder zweiten drahtlosen Netzwerke bildet.

2. Gateway nach Anspruch 1, **dadurch gekennzeichnet, dass**, falls der Gateway zwei Erweiterungskartenschlitze aufweist, die Schlitze (2,3) in einer einzigen Ebene ausgebildet sind und an gegenüberliegenden Seiten des Gateway angeordnet sind.

3. Gateway nach Anspruch 1 oder 2, **dadurch gekennzeichnet, dass** der Gateway eine längliche Form hat und als dünne, im wesentlichen rechteckige Einheit ausgebildet ist.

4. Gateway nach einem der Ansprüche 1 - 3, **dadurch gekennzeichnet, dass** der Gateway eine drahtlose Brücke zwischen einem Bluetooth-Netzwerk und einem drahtlosen Lokalbereichsnetzwerk bildet.

5. Gateway nach einem der Ansprüche 1 - 3, **dadurch gekennzeichnet, dass** der Gateway eine drahtlose Brücke zwischen einem Mobiltelefon-Drahtlosnetzwerk und einem weiteren drahtlosen Netzwerk bildet.

6. Gateway nach Anspruch 5, bei dem das Mobiltelefon-Netzwerk ein Netzwerk des Typs GSM Global Service for Mobile communication, oder GPRS General Packet Radio Service, oder UMTS Universal Mobile Telecommunications System ist.

7. Gateway nach einem der Ansprüche 1 - 6, **dadurch gekennzeichnet, dass** der Erweiterungskartenschlitz bzw. die Erweiterungskartenschlitze geeignet sind zur Aufnahme von: PC-Karten, CompactFlash-Karten oder Karten des Typs SD Secure Digital.

## Revendications

1. Passerelle destinée à former un pont sans fil entre un premier réseau sans fil et un second réseau sans fil, **caractérisée en ce que** la passerelle (1, 400) est portative et comporte une unité (410) de conversion de format destinée à transformer le format des signaux communiqués entre les formats utilisés par le premier et le second réseau sans fil respectivement, la passerelle comprenant en outre soit :
(i) deux logements (2, 3) de carte d'extension destinés à loger dans chaque logement une carte d'extension (4, 5), chaque carte d'extension constituant une interface sans fil vers l'un des premier et second réseaux sans fil respectivement, soit :
(ii) une unité intégrée de communication sans fil constituant une interface sans fil vers un réseau prédéterminé sans fil parmi les premier et second réseaux sans fil, et un logement (2 ou 3) de carte d'extension destiné à loger une carte d'extension (4 ou 5) constituant une interface sans fil vers l'autre des premier et second réseaux sans fil.

2. Passerelle selon la revendication 1, **caractérisée en ce que**, si la passerelle comporte deux logements de carte d'extension, les logements (2, 3) sont réalisés dans un plan et disposés sur des côtés opposés de la passerelle.

3. Passerelle selon la revendication 1 ou 2, **caractérisée en ce que** la passerelle a une forme allongée et est réalisée sous forme d'une mince unité pratiquement rectangulaire.

4. Passerelle selon l'une quelconque des revendications 1 à 3, **caractérisée en ce que** la passerelle forme un pont sans fil entre un réseau "Bluetooth" et un réseau local sans fil.

5. Passerelle selon l'une quelconque des revendications 1 à 3, **caractérisée en ce que** la passerelle forme un pont sans fil entre un réseau cellulaire sans fil et un autre réseau sans fil.

6. Passerelle selon la revendication 5, dans laquelle le réseau cellulaire est un réseau du système global de communications de mobiles GSM ou d'un service radioélectrique général par paquets GPRS ou du système de télécommunications universelles de mobiles UMTS.

7. Passerelle selon l'une quelconque des revendications 1 à 6, **caractérisée en ce que** le logement ou les logements de cartes d'extension sont destinés à loger un élément quelconque parmi une carte d'ordinateur personnel PC, une carte de mémoire flash "Compact Flash" et une carte numérique de sécurité SD.
